# FASCICULE DE BREVET EUROPEEN

(11) **EP 1 377 367 B1**
(45) Date de publication et mention de la délivrance du brevet: **28.03.2007**
(21) Numéro de dépôt: 02714284.3
(22) Date de dépôt: 06.03.2002
(51) Int. Cl.: B01J 8/02, B01D 53/88, B01D 53/04

(54) **CONDUIT DE FILTRATION TUBULAIRE POUR REACTEUR A FLUX RADIAL**
ROHRFÖRMIGES FILTERELEMENT FÜR EINEN RADIALFLUSS-REAKTOR
TUBULAR FILTER DUCT FOR RADIAL FLOW REACTOR

(30) Priorité: 28.03.2001 FR 0104150
(43) Date de publication de la demande: 07.01.2004
(73) Titulaire: Johnson Filtration Systems, 86530 Availles en Chatellerault (FR)
(72) Inventeur: NADERI, Abdel-Hossein, F-86000 Poitiers (FR)
(74) Mandataire: Prugneau, Philippe
(86) Numéro de dépôt international: PCT/FR2002/000808
(87) Numéro de publication internationale: WO 2002/078833

(56) Documents cités:
- EP-A- 0 483 975
- FR-A- 2 794 380
- US-A- 5 015 383
- US-A- 5 209 908

## Description

L'invention concerne un conduit de filtration tubulaire pour réacteur à flux radial, ayant une section transversale en forme de lunule et comprenant une première paroi bombée frontale s'étendant suivant une direction axiale du conduit et définissant un premier rayon de courbure de la périphérie de ladite section transversale, une seconde paroi bombée dorsale opposée à la paroi frontale et définissant un second rayon de courbure de la périphérie de la dite section transversale qui est supérieur au premier rayon de courbure, et deux troisièmes parois bombées latérales réunissant ladite paroi frontale et ladite paroi dorsale et définissant chacune un troisième rayon de courbure de la périphérie de ladite section transversale qui est inférieur au premier rayon de courbure.

Un tel conduit est déjà connu des documents de brevet US-5366704 et US-5015383 qui décrivent des réacteurs à flux radial. Ces réacteurs comprennent un lit de particules solides de forme torique et sont conçus pour qu'un fluide ou un gaz introduit dans le réacteur traverse ce lit de particules selon une direction radiale, avant de ressortir du réacteur. De tels réacteurs sont couramment utilisés pour des procédés pétrochimiques dans lesquels le flux fluide subit diverses réactions chimiques lorsqu'il traverse le lit de particules qui joue le rôle de catalyseur. Le lit torique est délimité extérieurement par une enveloppe sensiblement cylindrique, et intérieurement par un conduit central cylindrique s'étendant selon l'axe principal de l'enveloppe. Le fluide ou gaz à filtrer est introduit dans l'enveloppe à travers un ensemble de conduits de filtration tubulaires qui s'étendent parallèlement à l'axe principal de l'enveloppe en étant répartis sur la périphérie transversale de l'enveloppe avec chacun leur paroi dorsale plaquée contre la surface cylindrique de l'enveloppe. Dans la littérature, ces conduits de filtration tubulaires à section transversale en forme de lunule sont appelés « scallops ».

Dans le document US 5366704, le conduit de filtration tubulaire est fabriqué à partir d'une tôle ajourée qui est mise en forme par cintrage et aussi par pliage. En particulier, les parois latérales du conduit sont pliées ce qui interdit, pour ne pas affaiblir leur résistance mécanique, de les munir d'ouvertures pour le passage du fluide ou du gaz à filtrer. Il en résulte dans l'enveloppe cylindrique du réacteur des zones mortes entre deux conduits adjacents, non traversées par le flux de fluide ou de gaz, où s'accumulent des substrats solides qui tendent à accélérer, par les contraintes de pression qu'ils exercent au fil du temps sur les parois des conduits, le vieillissement des conduits de filtration et donc du réacteur. En particulier, les particules solides qui s'accumulent dans les zones mortes du réacteur se collent entre elles lors du refroidissement du réacteur et deviennent extrêmement dures. Plus généralement, les cycles thermiques que subit le réacteur donnent lieu à des dilatations différentielles qui, combinées à la présence de particules solides, génèrent des contraintes importantes sur les parois des conduits de filtration.

On connait également du document de brevet FR 2 794 380 un conduit de filtration constitué par une paroi frontale maillée soudée sur des parois dorsales et latérales en tôles. Là aussi, les parois dorsales et latérales en tôle augmentent les points morts dans le réacteur.

Dans le document US-5015383, chaque conduit de filtration est formé à partir d'un cylindre à surface maillée déformé par écrasement dans une matrice pour lui conférer une section transversale en forme de lunule et il en résulte une diminution de la résistance mécanique du conduit par création de zones de concentration de contrainte au niveau des parois latérales du conduit de filtration dont le rayon de courbure est très faible.

Le but de l'invention est de remédier à ces inconvénients en proposant un conduit de filtration tubulaire pour réacteur à flux radial qui présente une meilleure résistance mécanique dans le temps et dont la construction permet de réduire les espaces morts ou inactifs dans les réacteurs.

A cet effet, l'invention a pour objet un conduit de filtration tubulaire pour réacteur à flux radial, ayant une section transversale en forme de lunule et comprenant une première paroi bombée frontale s'étendant suivant une direction axiale du conduit et définissant un premier rayon de courbure de la périphérie de ladite section transversale, une seconde paroi bombée dorsale opposée à la paroi frontale et définissant un second rayon de courbure de la périphérie de la dite section transversale qui est supérieur au premier rayon de courbure, et deux troisièmes parois bombées latérales réunissant ladite paroi frontale et ladite paroi dorsale et définissant chacune un troisième rayon de courbure de la périphérie de ladite section transversale qui est inférieur au premier rayon de courbure, caractérisé en ce que lesdites première, seconde et troisièmes parois sont formées par un maillage constitué de fils parallèles rectilignes s'étendant suivant ladite direction axiale et répartis sur l'ensemble de la périphérie de ladite section transversale et de tiges support s'étendant perpendiculairement aux dits fils le long de la périphérie de ladite section transversale pour définir avec les fils des ouvertures longitudinales de dimensions sensiblement constantes dans lesdites parois du conduit, chaque tige support (FC) étant refermée sur elle-même par cintrage pour former lesdits rayons de courbure.

Ainsi, le conduit de filtration tubulaire selon l'invention est ajouré pour être filtrant sur l'ensemble de sa surface grâce au maillage réalisé par les fils et les tiges ce qui évite la création de zones mortes dans le réacteur mais le cintrage des tiges pour les refermer sur elles-mêmes confère aux parois du conduit une élasticité mécanique à la déformation lui permettant de mieux résister dans le temps aux contraintes de pression exercées par le catalyseur dans le réacteur et par les déformations de l'enveloppe du réacteur lors des variations de température de celui-ci.

Selon un autre mode de réalisation préféré du conduit de filtration selon l'invention, le troisième rayon de courbure de ladite section transversale est supérieur à un sixième du premier rayon de courbure.

Selon encore un autre mode de réalisation préféré du conduit de filtration selon l'invention, les tiges support sont disposées à l'intérieur du conduit et sont soudées aux fils. Les caractéristiques mécaniques des tiges et leur nombre dans un conduit doivent être appropriés aux contraintes de pression subies par le conduit dans le réacteur à flux radial.

Selon encore un autre mode de réalisation particulier du conduit de filtration selon l'invention, lesdits fils sont régulièrement espacés sur la périphérie de ladite section transversale avec un espacement sensiblement constant de sorte que la densité de flux liquide ou gazeux est homogène sur toute la surface du conduit.

L'invention concerne également un procédé de fabrication d'un conduit de filtration tubulaire tel que défini plus haut, caractérisé en ce qu'il consiste à former un cylindre constitué de tiges support s'étendant parallèlement les unes aux autres suivant l'axe du cylindre et disposées autour de la section transversale du cylindre et de fils s'étendant parallèlement les uns aux autres le long de la périphérie de la section transversale du cylindre; puis à fendre longitudinalement ledit cylindre entre deux tiges consécutives sur la périphérie de la section transversale du cylindre pour obtenir une plaque ayant une surface ajourée formée par le maillage des tiges support et des fils; puis à cintrer la plaque selon une direction perpendiculaire aux fils de façon à refermer sur elles-mêmes lesdites tiges support pour former le conduit tubulaire à section transversale en forme de lunule ; et à souder les deux extrémités de chaque tige support à un feuillard de raccordement.

Selon une variante du procédé de fabrication du conduit, lors de la constitution du cylindre, lesdits fils sont soudés aux tiges support en étant espacés entre eux avec des écarts variables de telle façon que les espacements entre les fils lors du cintrage de la plaque restent sensiblement constants sur toute la périphérie de la section transversale du conduit.

Un exemple de réalisation de l'invention est décrit plus en détail ci-après et illustré sur les dessins annexés.
La figure 1 est une vue d'ensemble en coupe partielle d'un réacteur à flux radial ;
La figure 2 est une vue d'ensemble d'un conduit de filtration tubulaire selon l'invention;
La figure 3 est une vue en coupe transversale d'un réacteur à flux radial;
La figure 4 est une vue en coupe faisant apparaître l'espace entre deux conduits de filtration tubulaires consécutifs dans un réacteur à flux radial ;
La figure 5 est une vue en coupe transversale d'un conduit de filtration tubulaire selon l'invention ;
La figure 6 illustre très schématiquement le maillage formé par les fils et les tiges et constituant une sorte de grille à partir de laquelle est fabriquée le conduit de filtration selon l'invention.

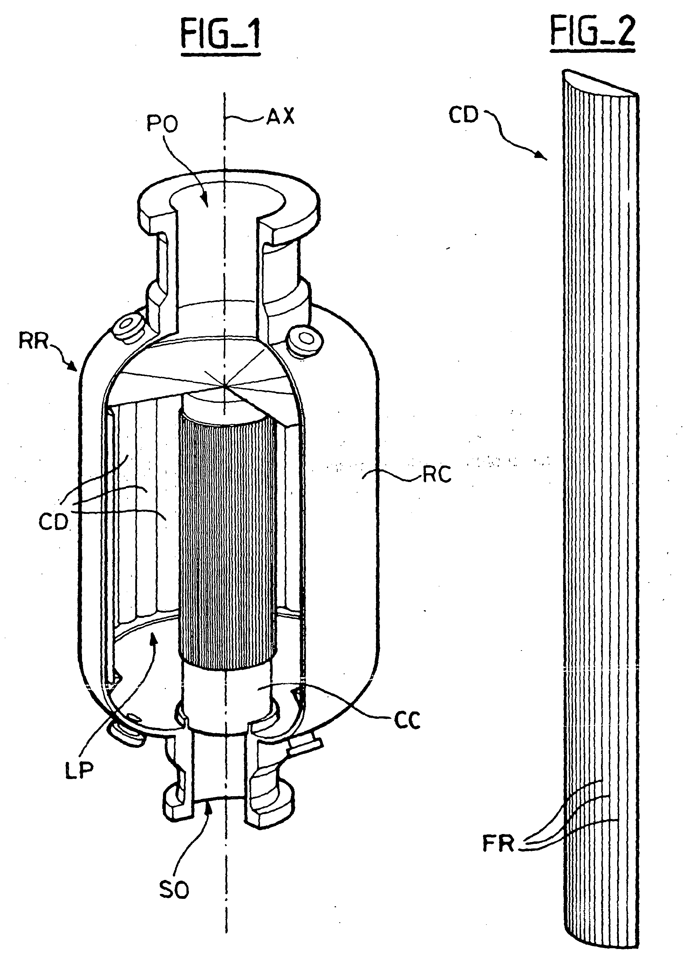

Comme représenté sur la figure 1, un réacteur à flux radial RR se présente extérieurement sous la forme d'une bonbonne formant un réservoir cylindrique RC s'étendant selon un axe de symétrie AX. Ce réservoir a dans sa partie supérieure un premier orifice PO et dans sa partie inférieure un second orifice SO. Les orifices PO et SO sont destinés respectivement à l'entrée et à la sortie d'un fluide traversant le réacteur.

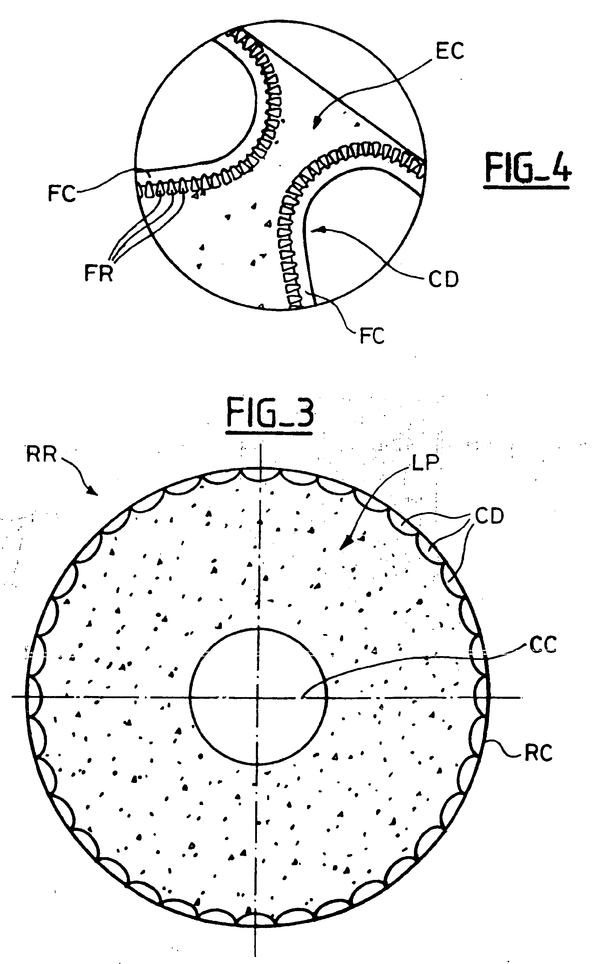

A l'intérieur de ce réservoir cylindrique sont disposées côte à côte une pluralité de conduits internes de filtration tubulaires CD s'étendant longitudinalement. Ces conduits sont maintenus par le réservoir RC et plaqués à la face interne du réservoir, parallèlement à l'axe AX, pour former une enveloppe sensiblement cylindrique visible en coupe transversale sur la figure 3. Les conduits CD sont ici en communication directe avec le premier orifice PO via leur extrémité supérieure, pour recevoir un flux de fluide. Ce fluide diffuse à travers la paroi ajourée des conduits visible sur la figure 2, pour traverser un lit de particules solides LP en convergeant radialement vers le centre du réacteur. Le fluide est ensuite collecté par un cylindre central CC s'étendant le long de l'axe AX et ayant également une paroi ajourée. Ce cylindre central CC est ici en communication avec le second orifice SO du réacteur via son extrémité inférieure. Ainsi, le fluide introduit dans le premier orifice PO transite par les conduits CD en les traversant radialement, puis traverse le lit de particules pour être collecté par le cylindre central CC et ressortir par le second orifice SO. Un tel réacteur peut également fonctionner dans le sens inverse, c'est à dire recevoir le fluide par le second orifice SO pour le restituer au niveau du premier orifice PO.

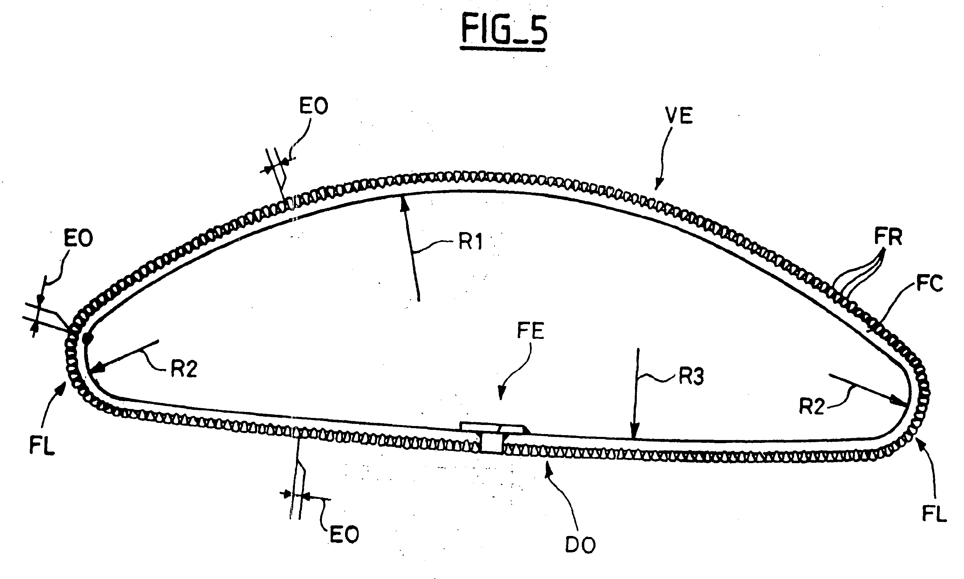

Le conduit de filtration tubulaire CD selon l'invention qui a été représenté en coupe transversale dans la figure 5 comprend un paroi bombée frontale formant le ventre VE du conduit qui est destiné à faire face à l'axe principal AX du réacteur, une paroi bombée dorsale formant le dos DO du conduit qui est destiné à être accolé contre la paroi interne du réservoir RC, le ventre et le dos étant reliées par deux parois bombées latérales formant les deux flancs FL du conduit, l'ensemble vu en coupe constituant un tout ayant en section transversale une forme de lunule telle que visible dans la figure 5. Plus particulièrement, la périphérie de la section transversale du conduit est constituées de quatre arcs de cercle ayant chacun un rayon de courbure, le ventre définissant un premier rayon de courbure R1 répondant aux exigences du procédé de filtration, les flancs définissant chacun un deuxième rayon de courbure R2 plus faible que le rayon R1, et le dos définissant un troisième rayon de courbure R3 qui est le rayon du réservoir cylindrique RC et qui est plus grand que le rayon R1. Généralement le rayon de courbure R2 défini par les flancs FL a une valeur très faible du fait qu'il est le résultat par exemple d'une opération de pliage par écrasement comme dans le brevet US-5015383 ce qui génère une zone de concentration de contraintes mécanique qui fragilise la résistance mécanique du conduit. Dans le conduit selon l'invention, le rayon de courbure R2 des flancs est choisi suffisamment grand et est obtenu par cintrage, de sorte qu'il ne fragilise pas le conduit, mais qu'au contraire, il constitue une zone élastique jouant le rôle de ressort. Le choix d'un rayon de courbure R2 suffisamment grand permet ainsi de mieux absorber les contraintes mécaniques appliquées par le lit de particules solides LP au ventre du conduit au cours des cycles thermiques successifs que subit le réacteur. Dans un tel cadre, on s'est aperçu que lorsque R2 est supérieur à un sixième de R1, la durée de vie du conduit est nettement augmentée.

Le conduit de filtration selon l'invention est réalisé à partir de fils parallèles soudés à des tiges supports de manière à réaliser une paroi ajourée sur toute la périphérie du conduit en vue de réduire les espaces morts dans le réacteur. Plus particulièrement, le conduit est constitué de fils rectilignes FR disposés parallèlement les uns aux autres le long de l'axe longitudinal du conduit comme visible sur la figure 2. Ces fils FR sont répartis sur l'ensemble de la périphérie de la section transversale en forme de lunule du conduit et sont soudés à des tiges support FC qui s'étendent perpendiculairement aux fils FR le long de la périphérie de la section transversale du conduit pour former avec les fils des ouvertures de filtration longitudinales de dimensions sensiblement constantes à la fois dans le ventre, le dos et les flancs du conduit. Ces tiges supports FC sont refermées sur elles-mêmes par cintrage comme indiqué plus haut pour former les rayons de courbure R1,R2 et R3 de la section transversale du conduit. Ils sont donc recourbés sur eux mêmes dans des plans perpendiculaires aux fils FR. Les deux extrémités de chaque tiges support FC sont fixées entre elles par soudage sur un feuillard FE qui s'étend sur toute la longueur du conduit, et qui permet de constituer un profil fermé pour le conduit. La section des fils FR peut avantageusement être trapézoïdale, le sommet du trapèze étant orienté face à la direction d'écoulement du flux dans le réacteur.

Ainsi, l'espace EC situé entre deux conduits consécutifs dans le réacteur qui est représenté dans la figure 4 n'est plus un espace mort puisque les flancs FL sont ajourés, ce qui permet au fluide de diffuser en direction de cet espace pour empêcher un colmatage formé par accumulation de substrat solide, ce qui contribue à augmenter la durée de vie du réacteur.

Ce sont les fils rectilignes FR qui laissent passer le fluide et interdisent aux particules de traverser la paroi du conduit. Ainsi, les fils rectilignes jouent le rôle de filtre, tandis que les tiges recourbées sur elles-mêmes jouent le rôle de support des fils rectilignes et sont disposées à l'intérieur du conduit. Les fils rectilignes FR selon l'invention sont régulièrement espacés sur la périphérie de la section transversale du conduit avec un espacement E0 sensiblement constant, malgré les différents rayon de courbure de cette section, ce qui contribue à homogénéiser la densité de flux traversant le conduit sur toute sa paroi de manière à réduire encore la formation de substrat solidifié dans toutes les zones situées autour du conduit.

Pour réaliser un tel conduit, on forme d'abord un cylindre constitué de tiges support rectilignes FC s'étendant parallèlement les unes aux autres suivant l'axe du cylindre et disposées autour de la section transversale du cylindre et de fils FR enroulés parallèlement les uns aux autres autour des tiges FC le long de la périphérie de la section transversale du cylindre. Puis on fend longitudinalement par sciage le cylindre entre deux tiges FC consécutives sur la périphérie de la section transversale du cylindre pour obtenir une plaque ou grille GR ayant une surface ajourée formée par le maillage des tiges support et des fils. Puis on cintre la plaque GR selon une direction perpendiculaire aux fils FR de façon à refermer sur elles-mêmes lesdites tiges support FC pour former le conduit tubulaire à section transversale en forme de lunule. Enfin, on soude les deux extrémités de chaque tige support FC au feuillard de raccordement FE.

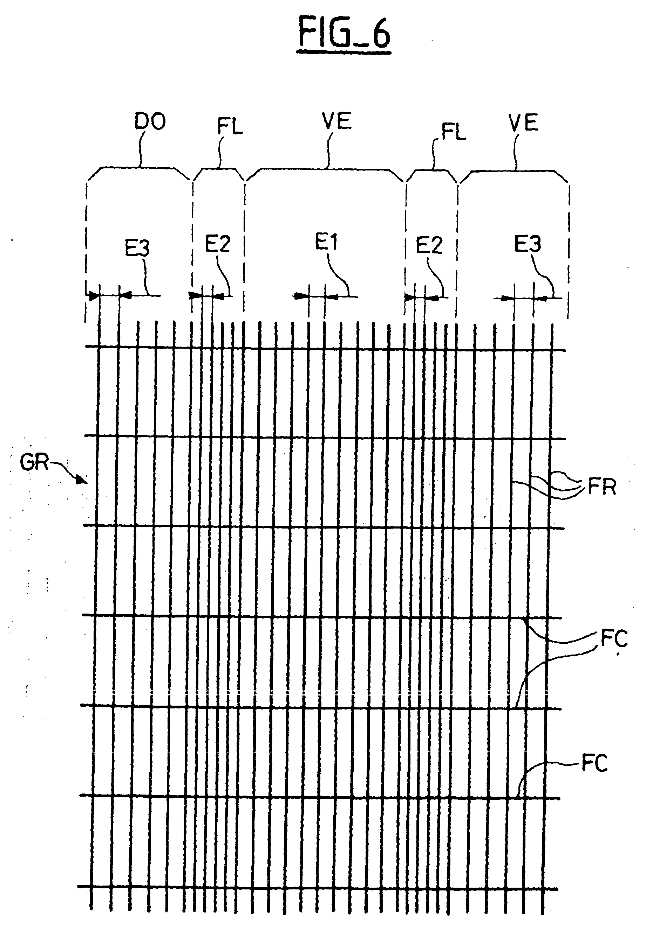

La figure 6 illustre schématiquement la disposition des fils FR et des tiges FC formant la plaque ou grille GR. Lors de la construction du cylindre, on prend en compte les variations des rayons de courbure en soudant les fils FR aux tiges FC avec des espacements variables entre les fils FR de telles façon que les espacements entre les fils FR lors du cintrage de la plaque GR restent sensiblement constant sur toute la périphérie de la section transversale du conduit. Comme illustré sur la figure 6, dans la zone de la grille GR correspondant au ventre du conduit, les fils FR sont espacés entre eux d'un premier écart E1. Dans les zones de la grille GR correspondant aux flancs du conduit, les fils FR sont espacés d'un second écart E2. Dans la zone de la grille correspondant au dos DO du conduit, les fils FR sont espacés d'un troisième écart E3. Comme visible sur la figure 6, les écarts E1, E2 et E3 entre les fils sont d'autant plus petits que ces fils font partie d'une paroi du conduit définissant un faible rayon de courbure. Ainsi, une fois la grille cintrée perpendiculairement aux fils FR, l'écart résultant E0 entre deux fils rectilignes consécutifs est le même sur tout le pourtour du conduit. Pratiquement, les valeurs des écarts E1, E2 et E3 pourront par exemple être déterminées par calcul, en fonction d'une valeur cible E0 prédéfinie.

Chaque conduit de filtration tubulaire peut être équipé d'un fond filtrant, de moyens de fixation à ses deux extrémités et de liaison avec un autre conduit de filtration adjacent dans le réacteur.

## Revendications

1. Conduit de filtration tubulaire pour réacteur à flux radial, ayant une section transversale en forme de lunule et comprenant une première paroi bombée frontale (VE) s'étendant suivant une direction axiale du conduit et définissant un premier rayon de courbure (R1) de la périphérie de ladite section transversale, une seconde paroi bombée dorsale (DO) opposée à la paroi frontale et définissant un second rayon de courbure (R3) de la périphérie de la dite section transversale qui est supérieur au premier rayon de courbure, et deux troisièmes parois bombées latérales (FL) réunissant ladite paroi frontale et ladite paroi dorsale et définissant chacune un troisième rayon de courbure (R2) de la périphérie de ladite section transversale qui est inférieur au premier rayon de courbure, lesdites première, seconde et troisièmes parois (VE,DO,FL) sont formées par un maillage constitué de fils (FR) parallèles rectilignes s'étendant suivant ladite direction axiale et répartis sur l'ensemble de la périphérie de ladite section transversale et de tiges support (FC) s'étendant perpendiculairement aux dits fils le long de la périphérie de ladite section transversale pour définir avec les fils des ouvertures longitudinales de dimensions sensiblement constantes dans lesdites parois (VE,D0,FL) du conduit, chaque tige support (FC) étant refermée sur elle-même par cintrage pour former lesdits rayons de courbure.

2. Le conduit de filtration selon la revendication 1, dans lequel le troisième rayon de courbure (R2) de ladite section transversale est supérieur à un sixième du premier rayon de courbure (R1).

3. Conduit de filtration selon la revendication 1 ou 2, dans lequel les tiges support (FC) sont disposées à l'intérieur du conduit et sont soudés aux fils (FR).

4. Conduit de filtration selon l'une des revendications 1 à 3, dans lequel lesdits fils (FR) sont régulièrement espacés sur la périphérie de ladite section transversale avec un espacement sensiblement constant.

5. Procédé de fabrication d'un conduit de filtration selon l'une des revendications 1 à 4, qui consiste à former un cylindre constitué de tiges support (FC) s'étendant parallèlement les unes aux autres suivant l'axe du cylindre et disposés autour de la section transversale du cylindre et de fils (FR) s'étendant parallèlement les uns aux autres le long de la périphérie de la section transversale du cylindre ; puis à fendre Longitudinalement ledit cylindre entre deux tiges (FC) consécutives sur la périphérie de la section transversale du cylindre pour obtenir une plaque ayant une surface ajourée formée par le maillage des tiges support et des fils; puis à cintrer la plaque selon une direction perpendiculaire aux fils (FR) de façon à refermer sur elles-mêmes lesdites tiges support (FC) pour former le conduit tubulaire à section transversale en forme de lunule ; et à souder les deux extrémités de chaque tige support à un feuillard de raccordement.

6. Le procédé de fabrication selon la revendication 5, dans lequel lors de la constitution du cylindre, lesdits fils (FR) sont soudés aux tiges support (FC) en étant espacés entre eux avec des écarts variables de telle façon que les espacements entre les fils (FR) lors du cintrage de la plaque restent sensiblement constants sur toute la périphérie de la section transversale du conduit.

## Claims

1. A tubular filter duct for a radial flow reactor, the duct having a crescent-shaped cross-section and comprising a front first curved wall (VE) extending in an axial direction of the duct and defining a first radius of curvature (R1) for the periphery of said cross-section, a back second curved wall (DO) opposite the front wall and defining a second radius of curvature (R3) for the periphery of said cross-section, the second radius of curvature being greater than the first radius of curvature, and two side third curved walls (FL) uniting said front and back walls and each defining a third radius of curvature (R2) for the periphery of said cross-section, which third radius of curvature is smaller than the first radius of curvature, said first, second, and third walls (VE, DO, FL) are formed by a mesh made up of parallel rectilinear wires (FR) extending in said axial direction and distributed around the entire periphery of said cross-section and support rods (FC) extending perpendicularly to said wires around the periphery of said cross-section to co-operate with the wires to form longitudinal openings of dimensions that are substantially constant in said walls (VE, DO, FL) of the duct, each support rod (FC) being looped by being curved so as to form said radius of curvature.

2. The filter duct according to claim 1, in which the third radius of curvature (R2) of said cross-section is greater than one-sixth the first radius of curvature (R1).

3. A filter duct according to claim 1 or claim 2, in which the support rods (FC) are disposed inside the duct and are welded to the wires (FR).

4. A filter duct according any one of claims 1 to 3, in which said wires (FR) are regularly spaced around the periphery of said cross-section at a spacing that is substantially constant.

5. A method of manufacturing a filter duct according to any one of claims 1 to 4, which consists in forming a cylinder made of support rods (FC) extending parallel to one another along the axis of the cylinder and disposed around the cross-section of the cylinder, and wires (FR) extending parallel to one another along the periphery of the cross-section of the cylinder; then splitting said cylinder longitudinally between two consecutive rods (FC) in the periphery of the cross-section of the cylinder in order to obtain a plate having a perforated surface formed by the mesh of support rods and wires; then curving the plate in a direction perpendicular to the wires (FR) in such a manner as to loop said support rods (FC) so as to form the tubular duct of crescent-shaped cross-section; and then welding the two ends of each support rod to a connecting strip.

6. A method of manufacture according to claim 5, in which, while making the cylinder, said wires (FR) are welded to the support rods (FC) while being spaced apart from one another at spacing that varies in such a manner that the spacing between wires (FR) remains substantially constant around the entire periphery of the cross-section of the duct once the plate has been curved.

## Patentansprüche

1. Röhrenförmige Filterleitung mit möndchenförmigem Querschnitt für einen Radialflussreaktor, bestehend aus einer ersten, gewölbten Vorderwand (VE), die sich axial zur Leitung erstreckt und einen ersten Krümmungsradius (R1) am Umfang des besagten Querschnitts beschreibt, aus einer zweiten, gewölbten Rückwand (DO), die gegenüber der Vorderwand liegt und einen zweiten Krümmungsradius (R3) des Umfangs des besagten Querschnitts beschreibt, welcher größer als der erste Krümmungsradius ist, und aus zwei dritten, gewölbten Seitenwänden (FL), die besagte Vorder- und Rückwand miteinander verbinden und eine jede von ihnen einen dritten Krümmungsradius (R2) des Umfangs des besagten Querschnitts beschreibt, welcher kleiner ist, als der erste Krümmungsradius, wobei besagte erste, zweite und dritte Wand (VE, DO, FL) gebildet werden durch eine Vermaschung aus in besagter axialer Richtung am gesamten Umfang des besagten Querschnitts angeordneten, parallen, geraden Drähten (FR) und rechtwinkling zu besagten Drähten entlang des Umfangs des besagten Querschnitts angeordneten Stützstäben (FC), um mit den Drähten in diesen Wänden (VE, DO, FL) der Leitung Längsöffnungen mit deutlich konstanten Abmessungen zu bilden, wobei jeder Stützstab (FC) durch Rundbiegen mit sich selbst verbunden wird, um besagte Krümmungsradien zu bilden.

2. Filterleitung nach Anspruch 1, bei der der dritte Krümmungsradius (R2) des besagten Querschnitts größer als ein Sechstel des ersten Krümmungsradius (R1) ist.

3. Filterleitung nach Anspruch 1 oder 2, bei der die Stützstäbe (FC) im Inneren der Leitung angeordnet und mit den Drähten (FR) verschweißt sind.

4. Filterleitung nach einem der Ansprüche 1 bis 3, bei der besagte Drähte (FR) in regelmäßigen Abständen am Umfang des besagten Querschnitts angeordnet und die Abstände deutlich konstant sind.

5. Herstellungsverfahren für eine Filterleitung nach einem der Ansprüche 1 bis 4, darin bestehend, dass ein Zylinder ausgebildet wird, der aus parallel zueinander entlang der Zylinderachse und um den Zylinderquerschnitt herum angeordneten Stützstäben (FC) und parallel zueinander entlang des Umfangs des Zylinderquerschnitts angeordneten Drähten (FR) gebildet wird, und dass dann besagter Zylinder zwischen zwei aufeinanderfolgenden Stützstäben (FC) am Umfang des Zylinderquerschnitts längs in zwei Teile geteilt wird, um eine Platte mit einer durchlöcherten Oberfläche zu erhalten, die aus der Vermaschung der Stützstäbe und Drähte gebildet wird, und dass dann diese Platte rechtwinklig zu den Drähten (FR) so zu biegen, dass sich besagte Stützstäbe (FC) miteinander verbinden, um die röhrenförmige Leitung mit möndchenförmigem Querschnitt zu bilden, und dann die beiden Enden eines jeden Stützstabs mit einem Anschlußblech zu verschweißen.

6. Herstellungsverfahren nach Anspruch 5, bei dem während der Ausbildung des Zylinders besagte, in einem unterschiedlichen Abstand zueinander angeordnete, Drähte (FR) so an die Stützstäbe (FC) geschweißt werden, dass die Abstände zwischen den Drähten (FR) während des Rundbiegens der Platte am gesamten Umfang des Leitungsquerschnitts deutlich konstant bleiben.
